# EUROPEAN PATENT SPECIFICATION

(11) **EP 2 713 657 B1**
(45) Date of publication and mention of the grant of the patent: **11.09.2019**
(21) Application number: 11867556.0
(22) Date of filing: 29.07.2011
(51) Int. Cl.: H04W 24/04

(54) **METHOD AND APPARATUS FOR CONTROLLING ACCESS NETWORK DEVICE, AND ACCESS NETWORK CONTROL DEVICE**
VERFAHREN UND VORRICHTUNG ZUR STEUERUNG EINER ZUGANGSNETZWERKVORRICHTUNG UND ZUGANGSNETZWERKSTEUERVORRICHTUNG
PROCÉDÉ ET APPAREIL POUR LA COMMANDE DE DISPOSITIF DE RÉSEAU D'ACCÈS, ET DISPOSITIF DE COMMANDE DE RÉSEAU D'ACCÈS

(43) Date of publication of application: 02.04.2014
(73) Proprietor: Huawei Technologies Co., Ltd., Longgang District Shenzhen, Guangdong 518129 (CN)
(72) Inventor: ZHU, Jiang, Shenzhen Guangdong 518129 (CN); YANG, Kai, Shenzhen Guangdong 518129 (CN); YANG, Zezhan, Shenzhen Guangdong 518129 (CN); ZENG, Yongmei, Shenzhen Guangdong 518129 (CN)
(74) Representative: Gill Jennings & Every LLP
(86) International application number: PCT/CN2011/077790
(87) International publication number: WO 2012/167492

(56) References cited:
- EP-A1- 2 273 827
- WO-A1-2010/130104
- CN-A- 101 437 265
- CN-A- 101 998 468
- US-A1- 2002 072 371
- US-A1- 2008 031 188
- US-A1- 2009 069 013
- US-A1- 2011 170 466

## Description

### TECHNICAL FIELD

Embodiments of the present invention relate to communications technologies, and in particular, to a method and an apparatus for controlling an access network device, and an access network control device.

### BACKGROUND

With the development of mobile communications technologies, mobile communication networks having higher and higher transmission rates, such as a second-generation (2nd-generation, 2G for short) mobile communication network, a third-generation (3rd-generation, 3G for short) mobile communication network, and a fourth-generation (4th-generation, 4G for short) mobile communication network, are being more and more widely applied. However, during a process of developing a high speed transmission network, due to various conditions and constraints, it is impossible to completely update an existing low speed transmission network to a new high speed transmission network within a short period of time. Therefore, these high speed transmission networks and the existing low speed transmission network will co-exist for a long time. To achieve energy saving of an access network device, when various kinds of mobile communication networks exist simultaneously, by periodically turning off and periodically turning on an access network device in one or more mobile communication networks, the access network device in the mobile communication network may be controlled.

However, in the foregoing prior art, after an access network device in a certain mobile communication network is turned off, it is possible that an access network device that is not turned off in the mobile communication network cannot provide a normal communication service for some terminals for overload and other causes, resulting in that communication services of these terminals cannot be performed normally, which lowers flexibility for controlling an access network device. US 2002/072371A1 discloses a method and device for performing a handover procedure for a mobile station communicating in a communication network using location information. A base station is controlled to be turned off when its load becomes low. US2011/170466A1 discloses a method for reducing power consumption by a base station in a wireless communication system. US 2009/069013A1 discloses a handover between a first radio network and a second radio network which is steered by an overall controller communicating via a core network with the 2G BSC and the 3G RNC. EP2432270A1 discloses a method, an apparatus and a system for controlling access points according to the judged overall capacity of an access point according to load information.

US 2008/0031188 A1 discloses forced handover in the context of multiple radio access technologies and heterogeneous networks and admission control for multi-technology access.

### SUMMARY

Embodiments of the present invention provide a method and an apparatus for controlling an access network device, and an access network control device as defined by the independent claims which are used to improve flexibility for controlling an access network device, and ensure that a communication service of a terminal is normally performed.

In one aspect, the present invention provides a method for controlling an access network device, comprising the steps, executed by a controller apparatus, of:
obtaining status information of radio access network devices in at least two mobile communication networks, where the mobile communication networks co-exist, and/or status information of users under the radio access network devices; and
   controlling, according to the status information of the radio access network devices in the at least two mobile communication networks and/or the status information of the users under the radio access network devices, one of the radio access network devices in at least one of the mobile communication networks to be turned off,
where the at least two mobile communication networks include either: a 2G mobile communication network and a 3G mobile communication network; a 2G mobile communication network and a 4G mobile communication network; or a 3G mobile communication network and a 4G mobile communication network
the method further comprising, before the radio access network device in the at least one mobile communication network is controlled to be turned off, migrating all users under the radio access network device to be turned off in the at least one mobile communication network to another mobile communication network in the at least two mobile communication networks by notifying to a radio access network control device in the at least one mobile communication network instruction information for handover to another mobile communication network in the at least two mobile communications network,
wherein the obtaining status information of radio access network devices in at least two mobile communication networks and/or status information of users under the radio access network devices comprises:
   interacting directly with access network control devices corresponding to the radio access network devices in the at least two mobile communication networks, so as to obtain the status information of the radio access network devices in the at least two mobile communication networks and/or the status information of the users under the radio access network devices; or
   interacting, through other devices, with radio access network control devices corresponding to the radio access network devices in the at least two mobile communication networks, so as to obtain the status information of the radio access network devices in the at least two mobile communication networks and/or the status information of the users under the radio access network devices,
   and wherein the status information of the radio access network devices in the at least two mobile communication networks comprises load information of the radio access network devices, and wherein the status information of the users under the radio access network devices comprises at least one parameter of a QoS parameter and a terminal type of the users,
   and wherein the controlling a radio access network device in at least one mobile communication network to be turned off or turned on comprises:
      sending instruction information to the radio access network device in the at least one mobile communication network, wherein the instruction information is used to instruct all or a part of functional modules of the radio access network device to be turned off.

In another aspect, the present invention provides an apparatus for controlling a radio access network device, where the apparatus includes:
an obtaining unit, configured to obtain status information of radio access network devices in at least two mobile communication networks and/or status information of users under the radio access network devices; and
   a control unit, configured to control, according to the status information of the radio access network devices in the at least two mobile communication networks, where the mobile communication networks co-exist, and/or the status information of the users under the radio access network devices, one of the radio access network devices in at least one of the mobile communication networks to be turned off,
where the at least two mobile communication networks include either: a 2G mobile communication network and a 3G mobile communication network; a 2G mobile communication network and a 4G mobile communication network; or a 3G mobile communication network and a 4G mobile communication network
the control unit being further configured to migrate, before the radio access network device in the at least one mobile communication network is controlled to be turned off, all users under the radio access network device to be turned off in the at least one mobile communication network to another mobile communication network in the at least two mobile communication networks by notifying to a radio access network control device in the at least one mobile communication network instruction information for handover to another mobile communication network in the at least two mobile communications network,
wherein the status information of the radio access network devices in the at least two mobile communication networks comprises load information of the radio access network devices, and wherein the status information of the users under the radio access network devices comprises at least one parameter of a QoS parameter and a terminal type of the users, and
wherein the controlling a radio access network device in at least one mobile communication network to be turned off or turned on comprises:
   sending instruction information to the radio access network device in the at least one mobile communication network, wherein the instruction information is used to instruct all or a part of functional modules of the radio access network device to be turned off.

In another aspect, the present invention provides an access network control device, including the foregoing apparatus for controlling an access network device.

It can be known from the foregoing technical solutions that, in the embodiments of the present invention, status information of access network devices in at least two mobile communication networks and/or status information of users under the access network devices is obtained, so as to control, according to the obtained status information of the access network devices in the at least two mobile communication networks and/or the obtained status information of the users under the access network devices, an access network device in at least one mobile communication network to be turned off or turned on, thereby improving flexibility for controlling an access network device and ensuring that a communication service of a terminal is normally performed.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and persons of ordinary skill in the art may still derive other drawings according to these accompanying drawings without creative efforts.
FIG. 1 is a schematic flow chart of a method for controlling an access network device according to an embodiment of the present invention;
FIG. 2 is a schematic flow chart of a method for controlling an access network device according to another embodiment of the present invention;
FIG. 3 is a schematic flow chart of a method for controlling an access network device according to another embodiment of the present invention;
FIG. 4 is a schematic structural diagram of an apparatus for controlling an access network device according to another embodiment of the present invention; and
FIG. 5 is a schematic structural diagram of an apparatus for controlling an access network device according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention.

In addition, the term "and/or" in the embodiments of the present invention is only an association relationship for describing associated objects, and represents that three relationships may exist, for example, A and/or B may represent the following three cases: A exists alone, both A and B exist simultaneously, and B exists alone. In addition, the character "/" herein usually represents that the former and latter associated objects are in an "or" relationship.

It should be noted that the technical solutions of the present invention are applicable to a scenario where any two or more mobile communication networks co-exist, for example, a 2G mobile communication network and a 3G mobile communication network co-exist; a 2G mobile communication network and a 4G mobile communication network co-exist; a 3G mobile communication network and a 4G mobile communication network co-exist; and a 2G mobile communication network, a 3G mobile communication network, and a 4G mobile communication network co-exist.

An access network device may be a base station (Base Transceiver Station, BTS for short) in a 2G mobile communication network, or a base station (NodeB) in a 3G mobile communication network, or an evolved base station (Evolved Node B, eNB or eNodeB for short) in a 4G mobile communication network, which is not limited in the embodiments of present invention.

A control device of the access network device may be a base station controller (Base Station Controller, BSC for short) in a 2G mobile communication network, or a radio network controller (Radio Network Controller, RNC for short) in a 3G mobile communication network, or an eNodeB in a 4G mobile communication network, which is not limited in the embodiments of present invention.

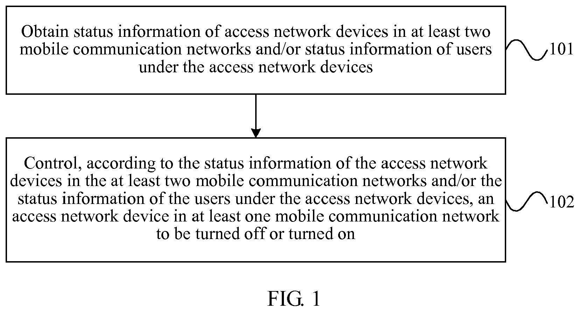

FIG. 1 is a schematic flow chart of a method for controlling an access network device according to an embodiment of the present invention, and as shown in FIG. 1, the method for controlling an access network device in this embodiment may include:
101. Obtain status information of access network devices in at least two mobile communication networks and/or status information of users under the access network devices.
Specifically, status information of access network devices in at least two mobile communication networks and/or status information of users under the access network devices may be obtained through periodic interaction with the access network devices in the at least two mobile communication networks.

Optionally, status information of access network devices in at least two mobile communication networks and/or status information of users under the access network devices may be obtained through direct interaction with access network control devices corresponding to the access network devices in the at least two mobile communication networks.

Optionally, status information of access network devices in at least two mobile communication networks and/or status information of users under the access network devices may also be obtained through interaction, through other devices (such as a core network device and a network management device), with access network control devices corresponding to the access network devices in the at least two mobile communication networks.

The status information of the access network devices in the at least two mobile communication networks may include, but is not limited to, load information of the access network devices; and the status information of the users under the access network devices may include at least one parameter of a quality of service (Quality of Service, QoS for short) parameter and a terminal type of the users.

The QoS parameter of the user may include, but is not limited to, a traffic class, a priority or a service rate. Specifically, a coarse-granularity traffic class may be obtained from user attribute information, for example, a traffic class may be obtained from a traffic class (Traffic Class) attribute, such as a voice service, a streaming service, an interactive service or a background service. For another example, a priority may be obtained from an allocation retention priority (Allocation Retention Priority, ARP for short), or a fine-granularity traffic class may be obtained based on identification of service data, such as instant messaging (Instant Message, IM for short), and email (Email).

102. Control, according to the status information of the access network devices in the at least two mobile communication networks and/or the status information of the users under the access network devices, an access network device in at least one mobile communication network to be turned off or turned on.

For example, instruction information is sent to the access network device in the at least one mobile communication network according to the status information of the access network devices in the at least two mobile communication networks and/or the status information of the users under the access network devices, and is used to instruct all or a part of functional modules of the access network device to be turned off or turned on.

It should be understood that turning off the access network device may be understood as turning off all the functional modules of the access network device (that is, powering off), or may also be understood as turning off a part of the functional modules of the access network device, such as one or more of a radio frequency transmitter module, a radio frequency receiver module, and a baseband processing module. Correspondingly, if all the functional modules of the access network device are turned off, turning on the access network device may be understood as turning on all the functional modules of the access network device; if a part of the functional modules of the access network device are turned off, turning on the access network device may be understood as turning on a part of the functional modules of the access network device which are turned off.

An execution body of 101 to 102 may be a processor, which may be independently disposed in any mobile communication network, or may be disposed on an access network control device in the mobile communication network, or may also be disposed on a core network device or a network management device, which is not limited in the embodiment of the present invention.

By taking a scenario where a 2G mobile communication network and a 3G mobile communication network co-exist as an example, the processor may specifically obtain, from a base station controller (Base Station Controller, BSC for short), status information of a base station (Base Transceiver Station, BTS for short) under the BSC and/or status information of a user under the BTS, and obtain, through an interface between the BSC and a radio network controller (Radio Network Controller, RNC for short), status information of a base station (NodeB) under the RNC and/or status information of a user under the NodeB. For example, specifically, an information element in a message in a common measurement procedure of the interface may be modified to carry the status information of the NodeB under the RNC and/or the status information of the user under the NodeB.

Optionally, the processor may obtain, directly from the RNC, the status information of the NodeB under the RNC and/or the status information of the user under the NodeB, and obtain, through the interface between the RNC and the BSC, the status information of the BTS under the BSC and/or the status information of the user under the BTS. The processor may be disposed independently, or may also be disposed on the BSC and the RNC, which is not limited in the embodiment. For example, specifically, the information element in the message in the common measurement procedure of the interface may be modified to carry the status information of the BTS under the BSC and/or the status information of the user under the BTS.

By taking the scenario where the 2G mobile communication network and the 3G mobile communication network co-exist as an example again, a condition for controlling an access network device in the 3G mobile communication network to be turned off may include, but is not limited to, at least one of the following conditions, for example, a load of the access network device in 3G is lower than a certain threshold; a traffic class of a user is a non-real time traffic class; a service rate of a user is lower than a certain threshold; and a priority of a user is not a highest priority. After the access network device in the 3G mobile communication network is turned off, a condition for controlling the access network device in the 3G mobile communication network to be turned on may include, but is not limited to, at least one of the following conditions, for example, a load of an access network device in the 2G mobile communication network is higher than a certain threshold; a priority of a user is a highest priority; and a service requirement corresponding to a QoS parameter of a user is not met (for example, a buffered data amount in a terminal or an access network control device in the 2G mobile communication network exceeds a certain threshold).

Optionally, if a user exists under an access network device which needs to be controlled to be turned off in the at least one mobile communication network, before the access network device in the at least one mobile communication network is controlled to be turned off, all users under the access network device to be turned off in the at least one mobile communication network may be further migrated to another mobile communication network in the at least two mobile communication networks. For example, an access network control device in the at least one mobile communication network may be notified of instruction information for handover to another mobile communication network in the at least two mobile communication networks. For detailed description for that after receiving the instruction information, the access network control device in the at least one mobile communication network initiates a handover process to enable a user to migrate, reference may be made to an inter-system handover process performed by a UE in the prior art, and details are not repeatedly described here.

Optionally, after the access network device in the at least one mobile communication network is controlled to be turned on, a part of users under the another mobile communication network in the foregoing at least two mobile communication networks may be further migrated to the access network device that is turned on in the at least one mobile communication network.

In this embodiment, status information of access network devices in at least two mobile communication networks and/or status information of users under the access network devices is obtained, so as to control, according to the obtained status information of the access network devices in the at least two mobile communication networks and/or the obtained status information of the users under the access network devices, an access network device in at least one mobile communication network to be turned off or turned on, thereby improving flexibility for controlling an access network device and ensuring that a communication service of a terminal is normally performed.

To make the method provided in the embodiment of the present invention clearer, the following takes a scenario where a universal mobile telecommunication system (Universal Mobile Telecommunication System, UMTS for short) network and a global system for mobile communications (Global System for Mobile Communications, GSM for short) network co-exist as an example.

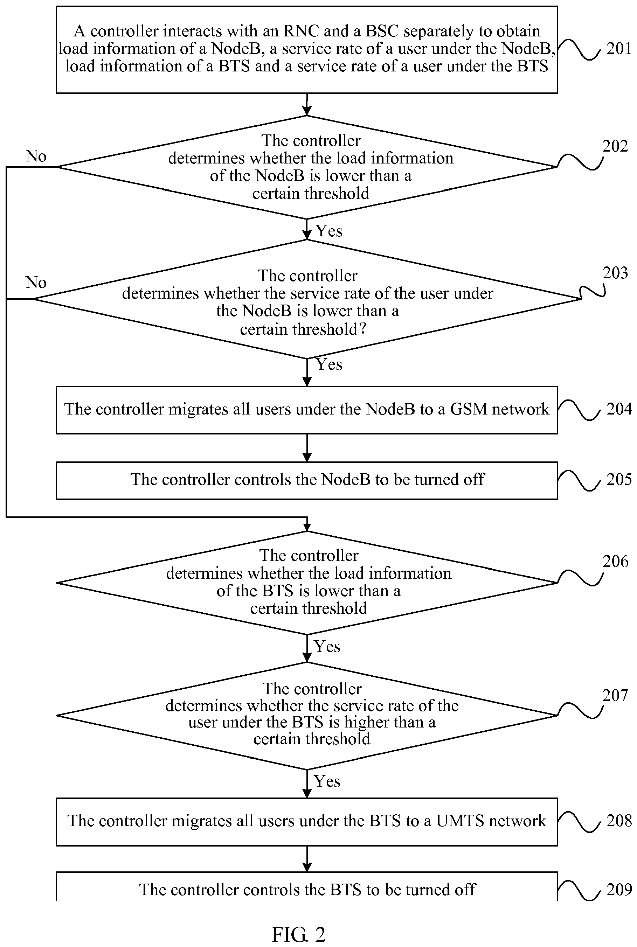

Referring to implementation of the foregoing embodiment, FIG. 2 is a schematic flow chart of a method for controlling an access network device according to another embodiment of the present invention. In this embodiment, an execution body is an independently disposed controller, and the controller controls a NodeB in a UMTS network to be turned off. As shown in FIG. 2, the schematic flow chart of the method for controlling an access network device according to the embodiment may include:
201. A controller interacts with an RNC and a BSC separately to obtain load information of a NodeB, a service rate of a user under the NodeB, load information of a BTS and a service rate of a user under the BTS.
   For example, specifically, a processor may directly interact with the RNC to obtain, from the RNC, load information of the NodeB under the RNC and the service rate of the user under the NodeB. Correspondingly, specifically, the processor may directly interact with the BSC to obtain, from the BSC, load information of the BTS under the BSC and the service rate of the user under the BTS.
   For another example, specifically, the processor may directly interact with the BSC to obtain, from the BSC, the load information of the BTS under the BSC and the service rate of the user under the BTS, and may further interact with the RNC through the BSC to obtain, through an interface between the BSC and the RNC, the load information of the NodeB under the RNC and the service rate of the user under the NodeB. For example, specifically, an information element in a message in a common measurement procedure of the interface may be modified to carry the load information of the NodeB under the RNC and the service rate of the user under the NodeB.
   For another example, the processor may further directly interact with the RNC to obtain, from the RNC, the load information of the NodeB under the RNC and the service rate of the user under the NodeB, and may further interact with the BSC through the RNC to obtain, through the interface between the RNC and the BSC, the load information of the BTS under the BSC and the service rate of the user under the BTS. For example, specifically, the information element in the message in the common measurement procedure of the interface may be modified to carry the load information of the BTS under the BSC and the service rate of the user under the BTS.
202. The controller determines whether the load information of the NodeB is lower than a certain threshold, if yes, execute 203, and otherwise, execute 206.
203. The controller determines whether the service rate of the user under the NodeB is lower than a certain threshold, if yes, execute 204 and 205, and otherwise, execute 206.
204. The controller migrates all users under the NodeB to a GSM network.
205. The controller controls the NodeB to be turned off.
206. The controller determines whether the load information of the BTS is lower than a certain threshold, if yes, execute 207, and otherwise, end the process.
207. The controller determines whether the service rate of the user under the BTS is higher than a certain threshold, if yes, execute 208 and 209, and otherwise, end the process.
208. The controller migrates all users under the BTS to a UMTS network.
209. The controller controls the BTS to be turned off.
In this embodiment, the controller obtains the load information of the NodeB, the service rate of the user under the NodeB, the load information of the BTS and the service rate of the user under the BTS, so as to enable the controller to control, according to the foregoing obtained information, the NodeB or the BTS to be turned off, thereby improving flexibility for controlling an access network device and ensuring that a communication service of a terminal is normally performed.

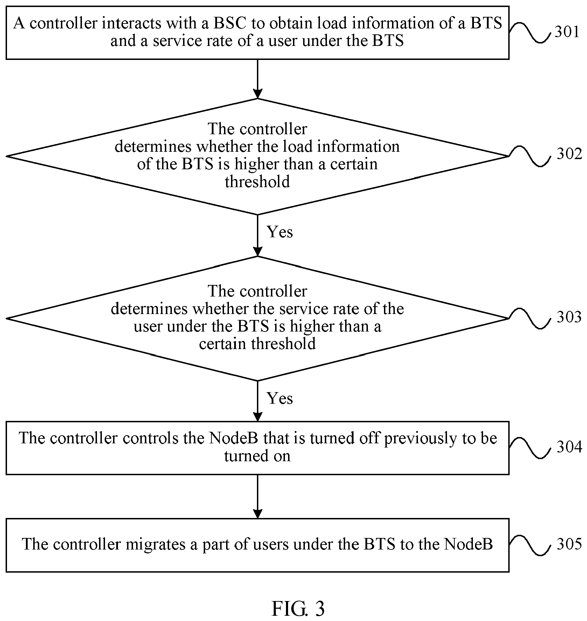

Referring to implementation of the foregoing embodiment, FIG. 3 is a schematic flow chart of a method for controlling an access network device according to another embodiment of the present invention. In this embodiment, an execution body is an independently disposed controller, and the controller controls a NodeB in a UMTS network to be turned on. As shown in FIG. 3, the schematic flow chart of the method for controlling an access network device according to the embodiment may include:
301. A controller interacts with a BSC to obtain load information of a BTS and a service rate of a user under the BTS.
   For example, specifically, a processor may directly interact with the BSC to obtain, from the BSC, load information of the BTS under the BSC and the service rate of the user under the BTS.
   For another example, the processor may further interact with the BSC through an RNC to obtain, through an interface between the RNC and the BSC, the load information of the BTS under the BSC and the service rate of the user under the BTS. For example, specifically, an information element in a message in a common measurement procedure of the interface may be modified to carry the load information of the BTS under the BSC and the service rate of the user under the BTS.
   It can be understood that, if the controller records when turning off a NodeB, in 301, the controller may obtain the load information of the NodeB and the service rate of the user under the NodeB without interacting with the RNC. If the controller does not record when turning off a NodeB, in 301, the controller may further interact with the RNC to obtain the load information of the NodeB and the service rate of the user under the NodeB whose specific numerical values are both 0.
302. The controller determines whether the load information of the BTS is higher than a certain threshold, if yes, execute 303, and otherwise, end the process.
303. The controller determines whether the service rate of the user under the BTS is higher than a certain threshold, if yes, execute 304 and 305, and otherwise, end the process.
304. The controller controls the NodeB that is turned off previously to be turned on.
305. The controller migrates a part of users under the BTS to the NodeB.

In this embodiment, the controller obtains the load information of the NodeB, the service rate of the user under the NodeB, the load information of the BTS and the service rate of the user under the BTS, so as to enable the controller to control, according to the foregoing obtained information, the NodeB that is previously turned off to be turned on, thereby improving flexibility for controlling an access network device and ensuring that a communication service of a terminal is normally performed.

It should be noted that, for ease of description, the foregoing method embodiments are expressed as a series of action combinations; however, persons skilled in the art should know that, the present invention is not limited by the described order of actions, because according to the present invention, some steps may be performed in other order or may be performed simultaneously. Next, persons skilled in the art should also know that, the embodiments described in the specification are all exemplary embodiments, and the involved actions and modules are not necessarily required by the present invention.

In the foregoing embodiments, descriptions of various embodiments have different emphases. For a part that is not described in detail in a certain embodiment, reference may be made to relevant descriptions in other embodiments.

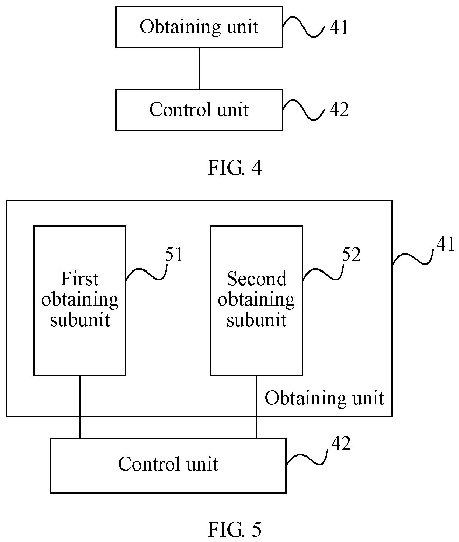

Referring to implementation of the foregoing embodiment, FIG. 4 is a schematic structural diagram of an apparatus for controlling an access network device according to another embodiment of the present invention, and as shown in FIG. 4, the apparatus for controlling an access network device in this embodiment may include an obtaining unit 41 and a control unit 42. The obtaining unit 41 is configured to obtain status information of access network devices in at least two mobile communication networks and/or status information of users under the access network devices. The control unit 42 is configured to control, according to the status information of the access network devices in the at least two mobile communication networks and/or the status information of the users under the access network devices obtained by the obtaining unit 41, an access network device in at least one mobile communication network to be turned off or turned on.

The method in the embodiment corresponding to FIG. 1 may be implemented by the apparatus for controlling an access network device provided in this embodiment.

Specifically, as shown in FIG. 5, the obtaining unit 41 in this embodiment may at least include one of the following subunits:
a first obtaining subunit 51, configured to directly interact with access network control devices corresponding to the access network devices in the at least two mobile communication networks, so as to obtain the status information of the access network devices in the at least two mobile communication networks and/or the status information of the users under the access network devices; and
a second obtaining subunit 52, configured to interact, through other devices, with the access network control devices corresponding to the access network devices in the at least two mobile communication networks, so as to obtain the status information of the access network devices in the at least two mobile communication networks and/or the status information of the users under the access network devices.

It should be noted that, FIG. 5 only shows a case in which both the first obtaining subunit 51 and the second obtaining subunit 52 are included, and in an optional embodiment, only one of the foregoing two subunits may be included.

By taking a scenario where a 2G mobile communication network and a 3G mobile communication network co-exist as an example, in the 2G mobile communication network, an access network device is a BTS, and an access network control device is a BSC; and in the 3G mobile communication network, an access network device is a NodeB, and an access network control device is an RNC. Optionally, the first obtaining subunit 51 specifically may obtain, directly from the BSC, status information of the BTS under the BSC and/or status information of the user under the BTS, and perform interaction through an interface between the BSC and the RNC, for example, an Iur-g interface, to obtain status information of the NodeB under the RNC and/or status information of a user under the NodeB. Optionally, the first obtaining subunit 51 specifically may obtain, directly from the RNC, the status information of the NodeB under the RNC and/or the status information of the user under the NodeB, and perform interaction through the interface between the RNC and the BSC, for example, an Iur-g interface, to obtain the status information of the BTS under the BSC and/or the status information of the user under the BTS.

The status information of the access network devices in the at least two mobile communication networks may include, but is not limited to, load information of the access network devices; and the status information of the users under the access network devices may include at least one parameter of a QoS parameter and a terminal type of the users.

The QoS parameter of the user may include, but is not limited to, a traffic class, a priority or a service rate. The obtaining unit 41 may specifically obtain a coarse-granularity traffic class from user attribute information. For example, the obtaining unit 41 may obtain a traffic class from a traffic class (Traffic Class) attribute, for example, a voice service, a streaming service, an interactive service or a background service. For another example, the obtaining unit 41 may obtain a priority from an allocation retention priority (Allocation Retention Priority, ARP for short), or the obtaining unit 41 may further obtain a fine-granularity traffic class based on identification of service data, such as instant messaging (Instant Messaging, IM for short) and email (Email).

Specifically, the control unit 42 in this embodiment may specifically send, according to the status information of the access network devices in the at least two mobile communication networks and/or the status information of the users under the access network devices obtained by the obtaining unit 41, instruction information to the access network device in the at least one mobile communication network, where the instruction information is used to instruct all or a part of functional modules of the access network device to be turned off or turned on.

Optionally, if a user exists under the access network device which needs to be controlled to be turned off in the at least one mobile communication network, before controlling the access network device in the at least one mobile communication network to be turned off, the control unit 42 may further migrate all users under the access network device in the at least one mobile communication network to another mobile communication network in the at least two mobile communication networks.

Optionally, after controlling the access network device in the at least one mobile communication network to be turned on, the control unit 42 may further migrate a part of users under the another mobile communication network in the at least two mobile communication networks to the access network device in the at least one mobile communication network.

The apparatus for controlling an access network device provided in this embodiment may be a processor, which may be independently disposed in any mobile communication network, or may be disposed on an access network control device in the mobile communication network, or may also be disposed on a core network device or a network management device, which is not limited in the embodiment of the present invention falling under the scope of the claims.

Referring to implementation of the foregoing embodiment, another embodiment of the present invention may further provide an access network control device, which may include the apparatus for controlling an access network device in the embodiments corresponding to FIG. 4 and FIG. 5.

Persons skilled in the art may clearly understand that, for ease and brevity of description, for a detailed working process of the foregoing system, apparatus, and unit, reference may be made to the corresponding process in the foregoing method embodiments, and details are not repeatedly described here.

In the several embodiments provided by the present application, it should be understood that the disclosed systems, apparatus, and method may be implemented in other manners. For example, the apparatus embodiments described above are merely exemplary. For example, dividing of the units is merely a kind of logical functional dividing, and there may be other dividing manners during actual implementation. For example, multiple units or components may be combined or be integrated to another system, or some features may be ignored or not executed. In another aspect, the shown or discussed mutual coupling, direct coupling, or communication connection may be implemented through some interfaces, and indirect coupling or communication connection of apparatuses, or units may be electrical, mechanical, or in other forms.

Units described as separate components may be or may not be physically separated. Components shown as units may be or may not be physical units, that is, may be located in one place, or may also be distributed to a plurality of network units. A part or all of the modules may be selected according to actual demands to achieve the objective of the solutions of the embodiments.

In addition, the functional units in the embodiments of the present invention may either be integrated in a processing unit, or each unit may be a separate physical unit, or two or more of the units are integrated in one unit. The integrated unit may be implemented in a form of hardware, or implemented in a form of hardware plus a software functional unit.

The integrated unit implemented in the form of a software functional unit may be stored in a computer readable storage medium. The software functional unit is stored in a storage medium and includes several instructions to instruct a computer device (which may be a personal computer, a server, or a network device) to perform a part of the steps of the method described in the embodiments of the present invention. The storage medium may include any medium that is capable of storing program codes, such as a USB flash drive, a removable hard disk, a read-only memory (Read-Only Memory, ROM for short), a random access memory (Random Access Memory, RAM for short), a magnetic disk or an optical disk.

Finally, it should be noted that the foregoing embodiments are merely provided for describing the technical solutions of the present invention, but not intended to limit the present invention which is defined by the claims.

## Claims

1. A method for controlling an access network device, comprising the steps, executed by a controller apparatus, of:
obtaining (101), status information of radio access network devices in at least two mobile communication networks, where the mobile communication networks co-exist, and/or status information of users under the radio access network devices; and
controlling (102), according to the status information of the radio access network devices in the at least two mobile communication networks and/or the status information of the users under the radio access network devices, one of the radio access network devices in at least one of the mobile communication networks to be turned off,
where the at least two mobile communication networks include either: a 2G mobile communication network and a 3G mobile communication network; a 2G mobile communication network and a 4G mobile communication network; or a 3G mobile communication network and a 4G mobile communication network
the method further comprising, before the radio access network device in the at least one mobile communication network is controlled to be turned off, migrating all users under the radio access network device to be turned off in the at least one mobile communication network to another mobile communication network in the at least two mobile communication networks by notifying to a radio access network control device in the at least one mobile communication network instruction information for handover to another mobile communication network in the at least two mobile communications network,
wherein the obtaining (101) status information of radio access network devices in at least two mobile communication networks and/or status information of users under the radio access network devices comprises:
interacting directly with access network control devices corresponding to the radio access network devices in the at least two mobile communication networks, so as to obtain the status information of the radio access network devices in the at least two mobile communication networks and/or the status information of the users under the radio access network devices; or
interacting, through other devices, with radio access network control devices corresponding to the radio access network devices in the at least two mobile communication networks, so as to obtain the status information of the radio access network devices in the at least two mobile communication networks and/or the status information of the users under the radio access network devices,
and wherein the status information of the radio access network devices in the at least two mobile communication networks comprises load information of the radio access network devices, and wherein the status information of the users under the radio access network devices comprises at least one parameter of a QoS parameter and a terminal type of the users,
and wherein the controlling a radio access network device in at least one mobile communication network to be turned off comprises: sending instruction information to the radio access network device in the at least one mobile communication network, wherein the instruction information is used to instruct all or a part of functional modules of the radio access network device to be turned off.

2. The method according to claim 1, wherein the at least two mobile communication networks comprise a 2G mobile communication network and a 3G mobile communication network, in the 2G mobile communication network, an access network device is a BTS, and an access network control device is a BSC; in the 3G mobile communication network, an access network device is a NodeB, and an access network control device is an RNC; and the interacting directly with access network control devices corresponding to the access network devices in the at least two mobile communication networks, so as to obtain the status information of the access network devices in the at least two mobile communication networks and/or the status information of the users under the access network devices comprises:
obtaining, directly from the BSC, status information of the BTS under the BSC and/or status information of a user under the BTS, and performing interaction through an interface between the BSC and the RNC, to obtain status information of the NodeB under the RNC and/or status information of a user under the NodeB; or
obtaining, directly from the RNC, status information of the NodeB under the RNC and/or status information of a user under the NodeB, and performing interaction through an interface between the RNC and the BSC, to obtain status information of the BTS under the BSC and/or status information of a user under the BTS.

3. The method according to claim 1, wherein the QoS parameter comprises at least one parameter of a traffic class, a priority, and a service rate.

4. An apparatus for controlling a radio access network device, comprising:
an obtaining unit (41), configured to obtain status information of radio access network devices in at least two mobile communication networks, where the mobile communication networks co-exist, and/or status information of users under the radio access network devices; and
a control unit (42), configured to control, according to the status information of the radio access network devices in the at least two mobile communication networks and/or the status information of the users under the radio access network devices, one of the radio access network devices in at least one of the mobile communication networks to be turned off,
where the at least two mobile communication networks include either: a 2G mobile communication network and a 3G mobile communication network; a 2G mobile communication network and a 4G mobile communication network; or a 3G mobile communication network and a 4G mobile communication network
the control unit being further configured to migrate, before the radio access network device in the at least one mobile communication network is controlled to be turned off, all users under the radio access network device to be turned off in the at least one mobile communication network to another mobile communication network in the at least two mobile communication networks by notifying to a radio access network control device in the at least one mobile communication network instruction information for handover to another mobile communication network in the at least two mobile communications network,
wherein the status information of the radio access network devices in the at least two mobile communication networks comprises load information of the radio access network devices, and wherein the status information of the users under the radio access network devices comprises at least one parameter of a QoS parameter and a terminal type of the users, and
wherein the controlling a radio access network device in at least one mobile communication network to be turned off comprises: sending instruction information to the radio access network device in the at least one mobile communication network, wherein the instruction information is used to instruct all or a part of functional modules of the radio access network device to be turned off.

5. The apparatus according to claim 4, wherein the obtaining unit at least comprises one of the following subunits:
a first obtaining subunit (51), configured to interact directly with access network control devices corresponding to the access network devices in the at least two mobile communication networks, so as to obtain the status information of the access network devices in the at least two mobile communication networks and/or the status information of the users under the access network devices; and
a second obtaining subunit (52), configured to interact, through other devices, with the access network control devices corresponding to the access network devices in the at least two mobile communication networks, so as to obtain the status information of the access network devices in the at least two mobile communication networks and/or the status information of the users under the access network devices.

6. The apparatus according to claim 5, wherein the at least two mobile communication networks comprise a 2G mobile communication network and a 3G mobile communication network, in the 2G mobile communication network, an access network device is a BTS, and an access network control device is a BSC; in the 3G mobile communication network, an access network device is a NodeB, and an access network control device is an RNC; and the first obtaining subunit (51) is specifically configured to:
obtain, directly from the BSC, status information of the BTS under the BSC and/or status information of a user under the BTS, and performing interaction through an interface between the BSC and the RNC, to obtain status information of the NodeB under the RNC and/or status information of a user under the NodeB; or
obtain, directly from the RNC, status information of the NodeB under the RNC and/or status information of a user under the NodeB, and performing interaction through an interface between the RNC and the BSC, to obtain status information of the BTS under the BSC and/or status information of a user under the BTS.

7. The apparatus according to claim 4, wherein the QoS parameter comprises at least one parameter of a traffic class, a priority, and a service rate.

8. An access network control device, comprising the apparatus for controlling an access network device according to any one of claims 4 to 7.

## Patentansprüche

1. Verfahren zur Steuerung eines Zugangsnetzwerkgeräts, aufweisend die Schritte, die von einem Steuergerät ausgeführt werden, zum:
Erhalten (101) von Statusinformationen von Funkzugangsnetzwerkgeräten in mindestens zwei Mobilkommunikationsnetzwerken, wo die Mobilkommunikationsnetzwerke nebeneinander bestehen und/oder von Statusinformationen von Anwendern unter den Funkzugangsnetzwerkgeräten; und Steuern (102) gemäß den Statusinformationen der Funkzugangsnetzwerkgeräte in mindestens zwei Mobilkommunikationsnetzwerken und/oder den Statusinformationen der Anwender unter den Funkzugangsnetzwerkgeräten, eines der Funkzugangsnetzwerkgeräte in mindestens einem der mobilen Kommunikationsnetzwerke, ausgeschaltet zu werden,
wo die mindestens zwei Mobilkommunikationsnetzwerke entweder enthalten: ein 2G-Mobilkommunikationsnetzwerk und ein 3G-Mobilkommunikationsnetzwerk; ein 2G-Mobilkommunikationsnetzwerk und ein 4G-Mobilkommunikationsnetzwerk; oder ein 3G-Mobilkommunikationsnetzwerk und ein 4G-Mobilkommunikationsnetzwerk
das Verfahren ferner aufweisend, bevor das Funkzugangsnetzwerkgerät in dem mindestens einen Mobilkommunikationsnetzwerk gesteuert wird, ausgeschalten zu werden, Umstellen aller Anwender unter dem Funkzugangsnetzwerkgerät, das ausgeschaltet wird, in dem mindestens einen Mobilkommunikationsnetzwerk auf ein anderes Mobilkommunikationsnetzwerk in den mindestens zwei Mobilkommunikationsnetzwerken, durch Melden an ein Funkzugangssteuergerät in dem mindestens einen Mobilkommunikationsnetzwerk von Befehlsinformationen zur Übergabe an ein anderes Mobilkommunikationsnetzwerk in den mindestens zwei Mobilkommunikationsnetzwerken,
wobei das Erhalten (101) von Statusinformationen von Funkzugangsnetzwerkgeräten in mindestens zwei Mobilkommunikationsnetzwerken und/oder Statusinformationen von Anwendern unter den Funkzugangsnetzwerkgeräten aufweist:
Interagieren direkt mit Zugangsnetzwerksteuergeräten, entsprechend den Funkzugangsnetzwerkgeräten in den mindestens zwei Mobilkommunikationsnetzwerken, um die Statusinformationen der Funkzugangsnetzwerkgeräte in den mindestens zwei Mobilkommunikationsnetzwerken und/oder die Statusinformationen der Anwender unter den Funkzugangsnetzwerkgeräten zu erhalten, oder
Interagieren durch andere Geräte mit Funkzugangsnetzwerksteuergeräten entsprechend den Funkzugangsnetzwerkgeräte in den mindestens zwei Mobilkommunikationsnetzwerken, um die Statusinformationen der Funkzugangsnetzwerkgeräte in den mindestens zwei Mobilkommunikationsnetzwerken und/oder die Statusinformationen der Anwender unter den Funkzugangsnetzwerkgeräten zu erhalten,
und wobei die Statusinformationen der Funkzugangsnetzwerkgeräte in den mindestens zwei Mobilkommunikationsnetzwerken Ladeinformationen der Funkzugangsnetzwerkgeräte aufweisen und wobei die Statusinformationen der Anwender unter den Funkzugangsnetzwerkgeräten mindestens einen Parameter eines QoS-Parameters und einen Endgerättyp der Anwender aufweisen,
und wobei das Steuern eines Funkzugangsnetzwerkgeräts in mindestens einem Mobilkommunikationsnetzwerk, das ausgeschalten wird, aufweist:
Senden von Befehlsinformationen an das Funkzugangsnetzwerkgerät in dem mindestens einen Mobilkommunikationsnetzwerk, wobei die Befehlsinformationen verwendet werden, allen oder einem Teil von funktionellen Modulen des Funkzugangsnetzwerkgeräts zu befehlen, ausgeschalten zu werden.

2. Verfahren nach Anspruch 1, wobei die mindestens zwei Mobilkommunikationsnetzwerke ein 2G-Mobilkommunikationsnetzwerk und ein 3G-Mobilkommunikationsnetzwerk aufweisen, im 2G-Mobilkommunikationsnetzwerk ein Zugangsnetzwerkgerät ein BTS ist und ein Zugangsnetzwerksteuergerät ein BSC ist; im 3G-Mobilkommunikationsnetzwerk ein Zugangsnetzwerkgerät ein NodeB ist und ein Zugangsnetzwerksteuergerät ein RNC ist; und das Interagieren direkt mit Zugangsnetzwerksteuergeräten entsprechend den Zugangsnetzwerkgeräten in den mindestens zwei Mobilkommunikationsnetzwerken, um Statusinformationen der Zugangsnetzwerkgeräte in den mindestens zwei Mobilkommunikationsnetzwerken und/oder die Statusinformationen der Anwender unter den Zugangsnetzwerkgeräten zu erhalten, aufweist:
Erhalten, direkt vom BSC, von Statusinformationen des BTS unter dem BSC und/oder Statusinformationen eines Anwenders unter dem BTS und Ausführen von Interaktion durch eine Schnittstelle zwischen dem BSC und dem RNC, um Statusinformationen des NodeB unter dem RNC und/oder Statusinformationen eines Anwenders unter dem NodeB zu erhalten; oder
Erhalten, direkt vom RNC, von Statusinformationen des NodeB unter dem RNC und/oder Statusinformationen eines Anwenders unter dem NodeB und Ausführen von Interaktion durch eine Schnittstelle zwischen dem RNC und dem BSC, um Statusinformationen des BTS unter dem BSC und/oder Statusinformationen eines Anwenders unter dem BTS zu erhalten.

3. Verfahren nach Anspruch 1, wobei der QoS-Parameter mindestens einen Parameter einer Verkehrsklasse, einer Priorität und einer Dienstrate aufweist.

4. Vorrichtung zum Steuern eines Funkzugangsnetzwerkgeräts, aufweisend:
eine Erhaltungseinheit (41), die konfiguriert ist, Statusinformationen von Funkzugangsnetzwerkgeräten in mindestens zwei Mobilkommunikationsnetzwerken, wo die Mobilkommunikationsnetzwerke nebeneinander bestehen, und/oder Statusinformationen von Anwendern unter den Funkzugangsnetzwerkgeräten zu erhalten; und
eine Steuereinheit (42), die konfiguriert ist, gemäß den Statusinformationen der Funkzugangsnetzwerkgeräte in den mindestens zwei Mobilkommunikationsnetzwerken und/oder den Statusinformationen der Anwender unter den Funkzugangsnetzwerkgeräten, eines der Funkzugangsnetzwerkgeräte in mindestens einem der Mobilkommunikationsnetzwerke zu steuern, ausgeschalten zu werden,
wo die mindestens zwei Mobilkommunikationsnetzwerke entweder enthalten: ein 2G-Mobilkommunikationsnetzwerk und ein 3G-Mobilkommunikationsnetzwerk; ein 2G-Mobilkommunikationsnetzwerk und ein 4G-Mobilkommunikationsnetzwerk; oder ein 3G-Mobilkommunikationsnetzwerk und ein 4G-Mobilkommunikationsnetzwerk
wobei die Steuereinheit ferner konfiguriert ist, bevor das Funkzugangsnetzwerkgerät in dem mindestens einen Mobilkommunikationsnetzwerk gesteuert wird, ausgeschalten zu werden, alle Anwender unter dem Funkzugangsnetzwerkgerät, das ausgeschaltet wird, in dem mindestens einen Mobilkommunikationsnetzwerk zu einem anderen Mobilkommunikationsnetzwerk in den mindestens zwei Mobilkommunikationsnetzwerken durch Melden an ein Funkzugangssteuergerät in dem mindestens einen Mobilkommunikationsnetzwerk von Befehlsinformationen zur Übergabe an ein anderes Mobilkommunikationsnetzwerk in den mindestens zwei Mobilkommunikationsnetzwerken, umgestellt werden,
wobei die Statusinformationen der Funkzugangsnetzwerkgeräte in den mindestens zwei Mobilkommunikationsnetzwerken Ladeinformationen der Funkzugangsnetzwerkgeräte aufweisen und wobei die Statusinformationen der Anwender unter den Funkzugangsnetzwerkgeräten mindestens einen Parameter eines QoS-Parameters und einen Endgerättyp der Anwender aufweisen, und
wobei das Steuern eines Funkzugangsnetzwerkgeräts in mindestens einem Mobilkommunikationsnetzwerk, das ausgeschaltet wird, aufweist:
Senden von Befehlsinformationen an das Funkzugangsnetzwerkgerät in dem mindestens einen Mobilkommunikationsnetzwerk, wobei die Befehlsinformationen verwendet werden, allen oder einem Teil von funktionellen Modulen des Funkzugangsnetzwerkgeräts zu befehlen, ausgeschalten zu werden.

5. Vorrichtung nach Anspruch 4, wobei die Erhaltungseinheit mindestens eine der folgenden Untereinheiten aufweist:
eine erste Erhaltungsuntereinheit (51), die konfiguriert ist, direkt mit Zugangsnetzwerksteuergeräten entsprechend den Zugangsnetzwerkgeräten in den mindestens zwei Mobilkommunikationsnetzwerken zu kommunizieren, um die Statusinformationen der Zugangsnetzwerkgeräte in den mindestens zwei Mobilkommunikationsnetzwerken und/oder die Statusinformationen der Anwender unter den Zugangsnetzwerkgeräten zu erhalten; und
eine zweite Erhaltungsuntereinheit (52), die konfiguriert ist, durch andere Geräte mit den Zugangsnetzwerksteuergeräten entsprechend den Zugangsnetzwerkgeräten in den mindestens zwei Kommunikationsnetzwerken zu kommunizieren, um die Statusinformationen der Zugangsnetzwerkgeräte in den mindestens zwei Mobilkommunikationsnetzwerken und/oder die Statusinformationen der Anwender unter den Zugangsnetzwerkgeräten zu erhalten.

6. Vorrichtung nach Anspruch 5, wobei die mindestens zwei Mobilkommunikationsnetzwerke ein 2G-Mobilkommunikationsnetzwerk und ein 3G-Mobilkommunikationsnetzwerk aufweisen, im 2G-Mobilkommunikationsnetzwerk ein Zugangsnetzwerkgerät ein BTS ist und ein Zugangsnetzwerksteuergerät ein BSC ist; im 3G-Mobilkommunikationsnetzwerk ein Zugangsnetzwerkgerät ein NodeB ist und ein Zugangsnetzwerksteuergerät ein RNC ist; und die erste Erhaltungsuntereinheit (51) insbesondere konfiguriert ist zum:
Erhalten, direkt vom BSC, von Statusinformationen des BTS unter dem BSC und/oder Statusinformationen eines Anwenders unter dem BTS und Ausführen von Interaktion durch eine Schnittstelle zwischen dem BSC und dem RNC, um Statusinformationen des NodeB unter dem RNC und/oder Statusinformationen eines Anwenders unter dem NodeB zu erhalten; oder
Erhalten, direkt vom RNC, von Statusinformationen des NodeB unter dem RNC und/oder Statusinformationen eines Anwenders unter dem NodeB und Ausführen von Interaktion durch eine Schnittstelle zwischen dem RNC und dem BSC, um Statusinformationen des BTS unter dem BSC und/oder Statusinformationen eines Anwenders unter dem BTS zu erhalten.

7. Vorrichtung nach Anspruch 4, wobei der QoS-Parameter mindestens einen Parameter einer Verkehrsklasse, einer Priorität und einer Dienstrate aufweist.

8. Zugangsnetzwerksteuergerät, aufweisend die Vorrichtung zum Steuern eines Zugangsnetzwerkgeräts nach einem der Ansprüche 4 bis 7.

## Revendications

1. Procédé pour commander un dispositif de réseau d'accès, comprenant les étapes, exécutées par un appareil de dispositif de commande, consistant :
à obtenir (101) des informations de statut de dispositifs de réseau d'accès radio dans au moins deux réseaux de communication mobile, où les réseaux de communication mobile coexistent, et/ou des informations de statut d'utilisateurs selon les dispositifs de réseau d'accès radio ; et
à commander (102), en fonction des informations de statut des dispositifs de réseau d'accès radio dans les deux, ou plus, réseaux de communication mobile et/ou des informations de statut des utilisateurs selon les dispositifs de réseau d'accès radio, que l'un des dispositifs de réseau d'accès radio dans au moins l'un des réseaux de communication mobile soit éteint,
où les deux, ou plus, réseaux de communication mobile comprennent : soit un réseau de communication mobile 2G et un réseau de communication mobile 3G ; soit un réseau de communication mobile 2G et un réseau de communication mobile 4G ; soit un réseau de communication mobile 3G et un réseau de communication mobile 4G ;
le procédé consistant en outre, avant que le dispositif de réseau d'accès radio dans le ou les réseaux de communication mobile ne soit commandé pour être éteint, à faire migrer tous les utilisateurs selon que le dispositif de réseau d'accès radio à éteindre dans le ou les réseaux de communication mobile vers un autre réseau de communication mobile dans les deux, ou plus, réseaux de communication mobile en notifiant à un dispositif de commande de réseau d'accès radio dans le ou les réseaux de communication mobile des informations d'instruction pour un transfert intercellulaire à un autre réseau de communication mobile dans les deux, ou plus, réseaux de communication mobile,
dans lequel l'obtention (101) d'informations de statut de dispositifs de réseau d'accès radio dans au moins deux réseaux de communication mobile et/ou d'informations de statut d'utilisateurs selon les dispositifs de réseau d'accès radio consiste :
à interagir directement avec des dispositifs de commande de réseau d'accès correspondant aux dispositifs de réseau d'accès radio dans les deux, ou plus, réseaux de communication mobile de sorte à obtenir les informations de statut des dispositifs de réseau d'accès radio dans les deux, ou plus, réseaux de communication mobile et/ou les informations de statut des utilisateurs selon les dispositifs de réseau d'accès radio ; ou
à interagir, par le biais d'autres dispositifs, avec des dispositifs de commande de réseau d'accès radio correspondant aux dispositifs de réseau d'accès radio dans les deux, ou plus, réseaux de communication mobile de sorte à obtenir les informations de statut des dispositifs de réseau d'accès radio dans les deux, ou plus, réseaux de communication mobile et/ou les informations de statut des utilisateurs selon les dispositifs de réseau d'accès radio,
et dans lequel les informations de statut des dispositifs de réseau d'accès radio dans les deux, ou plus, réseaux de communication mobile comportent des informations de charge des dispositifs de réseau d'accès radio, et dans lequel les informations de statut des utilisateurs selon les dispositifs de réseau d'accès radio comportent au moins un paramètre parmi un paramètre de qualité de service (QoS) et un type de terminal des utilisateurs,
et dans lequel la commande qu'un dispositif de réseau d'accès radio dans au moins un réseau de communication mobile soit éteint consiste :
à envoyer des informations d'instruction au dispositif de réseau d'accès radio dans le ou les réseaux de communication mobile, dans lequel les informations d'instruction sont utilisées pour donner comme instruction à la totalité, ou à une partie, des modules fonctionnels du dispositif de réseau d'accès radio d'être éteints.

2. Procédé selon la revendication 1, dans lequel les deux, ou plus, réseaux de communication mobile comprennent un réseau de communication mobile 2G et un réseau de communication mobile 3G, dans le réseau de communication mobile 2G, un dispositif de réseau d'accès est une BTS et un dispositif de commande de réseau d'accès est un BSC ; dans le réseau de communication mobile 3G, un dispositif de réseau d'accès est un noeud B et un dispositif de commande de réseau d'accès est un RNC ; et le fait d'interagir directement avec des dispositifs de commande de réseau d'accès correspondant aux dispositifs de réseau d'accès dans les deux, ou plus, réseaux de communication mobile de sorte à obtenir les informations de statut des dispositifs de réseau d'accès dans les deux, ou plus, réseaux de communication mobile et/ou les informations de statut des utilisateurs selon les dispositifs de réseau d'accès radio consiste :
à obtenir, directement du BSC, des informations de statut de la BTS selon le BSC et/ou des informations de statut d'un utilisateur selon la BTS et à réaliser une interaction au moyen d'une interface entre le BSC et le RNC, pour obtenir des informations de statut du noeud B selon le RNC et/ou des informations de statut d'un utilisateur selon le noeud B ; ou
à obtenir, directement du RNC, des informations de statut du noeud B selon le RNC et/ou des informations de statut d'un utilisateur selon le noeud B et à réaliser une interaction au moyen d'une interface entre le RNC et le BSC, pour obtenir des informations de statut de la BTS selon le BSC et/ou des informations de statut d'un utilisateur selon la BTS.

3. Procédé selon la revendication 1, dans lequel le paramètre de qualité de service comprend au moins un paramètre d'une classe de trafic, d'une priorité et d'un taux de service.

4. Appareil pour commander un dispositif de réseau d'accès radio, comprenant :
une unité d'obtention (41), configurée pour obtenir des informations de statut de dispositifs de réseau d'accès radio dans au moins deux réseaux de communication mobile, où les réseaux de communication mobile coexistent, et/ou des informations de statut d'utilisateurs selon les dispositifs de réseau d'accès radio ; et
une unité de commande (42), configurée pour commander, en fonction des informations de statut des dispositifs de réseau d'accès radio dans les deux, ou plus, réseaux de communication mobile et/ou des informations de statut des utilisateurs selon les dispositifs de réseau d'accès radio, que l'un des dispositifs de réseau d'accès radio dans au moins l'un des réseaux de communication mobile soit éteint, où les deux, ou plus, réseaux de communication mobile comprennent : soit un réseau de communication mobile 2G et un réseau de communication mobile 3G ; soit un réseau de communication mobile 2G et un réseau de communication mobile 4G ; soit un réseau de communication mobile 3G et un réseau de communication mobile 4G, l'unité de commande étant en outre configurée pour faire migrer, avant que le dispositif de réseau d'accès radio dans le ou les réseaux de communication mobile ne soit commandé pour être éteint, tous les utilisateurs selon que le dispositif de réseau d'accès radio à éteindre dans le ou les réseaux de communication mobile vers un autre réseau de communication mobile dans les deux, ou plus, réseaux de communication mobile en notifiant à un dispositif de commande de réseau d'accès radio dans le ou les réseaux de communication mobile des informations d'instruction pour un transfert intercellulaire à un autre réseau de communication mobile dans les deux, ou plus, réseaux de communication mobile,
dans lequel les informations de statut des dispositifs de réseau d'accès radio dans les deux, ou plus, réseaux de communication mobile comportent des informations de charge des dispositifs de réseau d'accès radio, et dans lequel les informations de statut des utilisateurs selon les dispositifs de réseau d'accès radio comportent au moins un paramètre parmi un paramètre de qualité de service (QoS) et un type de terminal des utilisateurs, et
dans lequel la commande qu'un dispositif de réseau d'accès radio dans au moins un réseau de communication mobile soit éteint consiste :
à envoyer des informations d'instruction au dispositif de réseau d'accès radio dans le ou les réseaux de communication mobile, dans lequel les informations d'instruction sont utilisées pour donner comme instruction à la totalité, ou à une partie, des modules fonctionnels du dispositif de réseau d'accès radio d'être éteints.

5. Appareil selon la revendication 4, dans lequel l'unité d'obtention comprend au moins l'une des sous-unités suivantes :
une première sous-unité d'obtention (51), configurée pour interagir directement avec des dispositifs de commande de réseau d'accès correspondant aux dispositifs de réseau d'accès dans les deux, ou plus, réseaux de communication mobile de sorte à obtenir les informations de statut des dispositifs de réseau d'accès dans les deux, ou plus, réseaux de communication mobile et/ou les informations de statut des utilisateurs selon les dispositifs de réseau d'accès ; et
une seconde sous-unité d'obtention (52), configurée pour interagir, par le biais d'autres dispositifs, avec les dispositifs de commande de réseau d'accès correspondant aux dispositifs de réseau d'accès dans les deux, ou plus, réseaux de communication mobile de sorte à obtenir les informations de statut des dispositifs de réseau d'accès dans les deux, ou plus, réseaux de communication mobile et/ou les informations de statut des utilisateurs selon les dispositifs de réseau d'accès.

6. Appareil selon la revendication 5, dans lequel les deux, ou plus, réseaux de communication mobile comprennent un réseau de communication mobile 2G et un réseau de communication mobile 3G, dans le réseau de communication mobile 2G, un dispositif de réseau d'accès est une BTS et un dispositif de commande de réseau d'accès est un BSC ; dans le réseau de communication mobile 3G, un dispositif de réseau d'accès est un noeud B et un dispositif de commande de réseau d'accès est un RNC ; et la première sous-unité d'obtention (51) est spécialement configurée :
pour obtenir, directement du BSC, des informations de statut de la BTS selon le BSC et/ou des informations de statut d'un utilisateur selon la BTS et pour réaliser une interaction au moyen d'une interface entre le BSC et le RNC, pour obtenir des informations de statut du noeud B selon le RNC et/ou des informations de statut d'un utilisateur selon le noeud B ; ou
pour obtenir, directement du RNC, des informations de statut du noeud B selon le RNC et/ou des informations de statut d'un utilisateur selon le noeud B et pour réaliser une interaction au moyen d'une interface entre le RNC et le BSC, pour obtenir des informations de statut de la BTS selon le BSC et/ou des informations de statut d'un utilisateur selon la BTS.

7. Appareil selon la revendication 4, dans lequel le paramètre de qualité de service comprend au moins un paramètre parmi une classe de trafic, une priorité et un taux de service.

8. Dispositif de commande de réseau d'accès, comprenant l'appareil pour commander un dispositif de réseau d'accès selon l'une quelconque des revendications 4 à 7.
